# EUROPEAN PATENT SPECIFICATION

(11) **EP 3 367 458 B1**
(45) Date of publication and mention of the grant of the patent: **30.11.2022**
(21) Application number: 17157623.4
(22) Date of filing: 23.02.2017
(51) Int. Cl.: H01M 50/103, H01M 50/171, H01M 50/176, H01M 50/55, H01M 50/553, H01M 10/052

(54) **SECONDARY CELL FOR A TRACTION BATTERY AND METHOD FOR MANUFACTURING A SECONDARY CELL**
SEKUNDÄRE ZELLE FÜR EINE TRAKTIONSBATTERIE UND HERSTELLUNGSVERFAHREN EINER SEKUNDÄRZELLE
CELLULE SECONDAIRE POUR UNE BATTERIE DE TRACTION ET PROCÉDURE DE PRODUCTION D'UNE CELLULE SECONDAIRE

(43) Date of publication of application: 29.08.2018
(73) Proprietor: Robert Bosch GmbH, 70442 Stuttgart (DE); GS Yuasa International Ltd., Kisshoin, Minami-ku, Kyoto-shi, Kyoto 601-8520 (JP)
(72) Inventor: Pilz, Thomas, 71229 Leonberg (DE); Kaspar, Jan, 70806 Kornwestheim (DE); Grauer, Benjamin, 70563 Stuttgart (DE); Ohmer, Nils, 70569 Stuttgart (DE); Wedul, Eric, 71638 Ludwigsburg (DE)
(74) Representative: Isarpatent

(56) References cited:
- US-A1- 2004 234 846
- US-A1- 2006 099 501
- US-A1- 2015 280 274
- US-B2- 9 263 712

## Description

The present invention relates to a secondary cell for a traction battery and a method for manufacturing a secondary cell.

US 2006/099501 A1 discloses a secondary battery including a prismatic placing, an electrode assembly accommodated in the casing, and a cap assembly coupled to an upper end of the casing in order to seal the opened upper end of the casing.

The casing is made from aluminum or an aluminum alloy and may act as a terminal. The cap assembly includes a conductive cap plate. The positive electrode tab protruding from the positive electrode is welded to a lower surface of the conductive cap plate, and the negative electrode tab protruding from the negative electrode is welded to a lower end of the electrode terminal.

A similar secondary battery as known from US 2004/234846 A1

Recently, secondary cells, such as lithium ion cells, are used in different applications. For example, secondary cells are installed in electric vehicles and hybrid electric vehicles to supply electric drive units of such vehicles with electric power. Several secondary cells can be combined with each other to form a battery module of a modular battery. The secondary cells of such a battery module are connected in series or in parallel. The battery modules are connected in series in one or more strings to form the modular battery.

High energy densities of secondary cells are intended to increase the cruising range of a vehicle and/or to reduce costs. But usually, in case of an error, lithium ion secondary cells with high energy densities establish higher reaction kinetics. To prevent error events like a so called thermal runaway of a secondary cell in case of an error, for example an internal short circuit or a nail penetration of a secondary cell and/or an external short of a secondary cell and/or overcharge of a secondary cell and/or a crash/crush event of a secondary cell, the secondary cell can be brought in a safe state by means of a fast discharge device and/or a fast shutdown device, both bringing the shut-down functionalized separator of the secondary cell into shutdown by heating up the cell, due to a high discharge current, homogeneously. A principal requirement for such a fast discharge of a secondary cell is a very small electrical resistance along a whole external fast discharge short circuit path between an anode and a cathode of the secondary cell. Preferably, the electrical resistance of such a fast discharge path is less than 100 µΩ.

US 2016/056444 A1 discloses a battery protection circuit module package capable of easily achieving high integration and size reduction. The battery protection circuit module package includes a terminal lead frame including a first internal connection terminal lead and a second internal connection terminal lead provided at two edges of the terminal lead frame and electrically connected to electrode terminals of a battery bare cell, and a plurality of external connection terminal leads provided between the first and second internal connection terminal leads and serving as a plurality of external connection terminals, and a device package including a substrate mounted on the terminal lead frame to be electrically connected to the terminal lead frame, and providing a battery protection circuit device thereon.

KR 2015/0038932 A discloses a method for manufacturing a secondary battery with an electrode assembly embedded in a square shaped can. The method includes the following steps: (a) inserting the electrode assembly into the square shaped can and combining a top can with an electrolyte inlet with the upper side of the square shaped can which is opened; (b) inserting the square shaped can to a protection case with an inner shape corresponding to the outer appearance of the square shaped can; (c) injecting the electrolyte through the electrolyte inlet and performing a charging operation for a first pre-formation; (d) sealing the electrolyte inlet after the gas generated in the first pre-formation is outputted and performing a full charging operation, a full discharging operation, and an aging operation for a second pre-formation; and (e) outputting the gas generated in the second pre-formation and removing the protection case.

### Disclosure of the invention

It is an object of the present invention to provide a secondary cell for a traction battery of a vehicle with such a cell design that a fast discharge path with very low electrical resistance can be established in case of an error.

This object is solved by the independent claims. Advantageous embodiments are disclosed in the following description, the dependent claims and the drawings, wherein these embodiments either by taken alone or in any combination of at least two embodiments with each other may relate to a preferred or advantageous aspect of the present invention. Embodiments of the secondary cell may be embodiments of the method and vice versa, even if this is not explicitly disclosed in the following.

Since, according to the present invention, both current collectors of the secondary cell are welded to the respective electrically conductive element being welded to the respective terminal, the electric resistance between the current collectors and the respective secondary cell terminals is very small. This makes is possible to establish a fast discharge short circuit path between the electrodes of the secondary cell via the secondary cell terminal with very low electric resistance, so that the secondary cell according to the present invention could be brought very quickly in a safe state in case of an error. The current collectors may be welded the respective electrically conductive element by laser welding, pressure welding, spot welding or the like. The respective electrically conductive element may be welded to the respective secondary cell terminal by laser welding, pressure welding, spot welding or the like.

Further, since the current collectors of the secondary cell according to the present invention are arranged at the same side of the electrochemical cell the volume occupancy of the secondary cell, and therefore the energy density of the secondary cell, is very high. Through this, also the energy density of a battery module constituted by secondary cells according to the present invention is very high.

The prismatic casing may be ashlar-shaped or may have triangular or other polygonal base and top surface areas. The aperture of the case part of the casing is arranged at an end surface of the case part. The case part may be manufactured by deep drawing or the like. The case part constitutes a terminal of the secondary cell, to which at least one electrically conductive element is welded. The cap part may be indirectly or directly connected with the side of the case part comprising the aperture. The cap part constitutes a further terminal of the secondary cell, to which at least one electrically conductive element is welded.

The electrochemical cell may be a cell with stacked electrodes or a jelly roll cell.

The secondary cell according to the present invention may alternately comprise two or more electrochemical cells contained within the casing, wherein homopolar current collectors of the individual electrochemical cells may be combined with each other to form a common current collector, which can be welded to the respective secondary cell terminal or the respective electrically conductive element. The anode current collector is indirectly connected with the anode terminal of the secondary cell. The cathode current collector is indirectly connected with the cathode terminal of the secondary cell, whereas the cell housing functions as a terminal. When the secondary cell is discharged, the cathode current collector being electrically connected with the cathode of the electrochemical cell forms the positive polarized current collector, and the anode current collector being electrically connected with the anode of the electrochemical cell forms the negative polarized current collector. When the secondary cell is charged, the cathode current collector forms the negative polarized current collector, and the anode current collector forms the positive polarized current collector.

The vehicle may be an electric vehicle or a hybrid electric vehicle in form of a land vehicle, a water vehicle or an air vehicle.

Both the case part and the cap part each form a terminal of the secondary cell.

The cathode current collector is electrically connected to the case part via the first electrically conductive element, and the anode current collector is electrically connected to the cap part via the second electrically conductive element. The cathode current collector is welded to the first electrically conductive element, and the first electrically conductive element is welded to the electrically conductive part of the case part. Further, the anode current collector is welded to the second electrically conductive element, and the second electrically conductive element is welded to the electrically conductive part of the cap part.

Through this, the electrochemical cell can be effectively cooled by cooling the case part and the cap part, each being thermally conductive connected with one of the electrodes of the secondary cell. Alternately, the whole case part and/or the whole cap part can be electrically conductive. The welding contacts between the mentioned components of the secondary cell make it possible to establish a fast discharge short circuit path between the electrodes of the secondary cell with very low electric resistance, so that the secondary cell could be brought very quickly in a safe state in case of an error. In any case, the individual welding between the mentioned components of the secondary cell could be performed using laser welding, pressure welding, spot welding or the like. The electrochemical cell further comprises a safety device for discharging the electrochemical cell when the electrochemical cell is in an abnormal state wherein the safety device is electrically connected with the cathode current collector via the case part and with the anode current collector via the cap part.

According to a further advantageous embodiment the secondary cell further comprises at least one electrically non-conductive isolation element, wherein the first electrically conductive element is formed as a plate extending along the side of the electrochemical cell facing the cap part and has a first through hole through which the anode current collector is guided without contacting the first electrically conductive element, the isolation element extends along a side of the first electrically conductive element facing the cap part and comprises a second through hole aligned with the first through hole of the first electrically conductive element, and the second electrically conductive element is formed as a plate extending along a side of the isolation element facing the cap part. The isolation element is arranged between the first electrically conductive element and the second electrically conductive element, so that the electrically conductive elements, and therefore the electrodes of the secondary cell, are electrically isolated from one another by means of the isolation element. As the case part and the cap part act as terminals of the secondary cell, the case part and the cap part may be electrically isolated from one another by means of the isolation element. Since the electrically conductive elements are plate-shaped, a relative large contact area is given between the respective electrically conductive element and the respective current collector, and also between the respective electrically conductive element and the cap part or case part, so that the contact resistance between the respective electrically conductive element and the respective current collector, and between the respective electrically conductive element and the cap part or case part, is very small. Moreover, these large contact areas each create a large welding contact area between the respective electrically conductive element and the respective current collector, so that the strength of these connections are enhanced. Furthermore, a compressing of the individual components of the secondary cell with each other during assembly of the secondary cell is easier because the compressing is more uniform since no differences in the material strength exist in the different component layers, each being constituted by one component, i. e. the first electrically conductive element, the isolation element and the second electrically conductive element, of the secondary cell. A further advantage of this embodiment is that no problems due to different coefficients of expansion within each layer occur.

According to a further advantageous embodiment the secondary cell further comprises at least one electrically non-conductive isolation element, wherein the first electrically conductive element is formed as a plate extending along a part of the side of the electrochemical cell facing the cap part without contacting the anode current collector, the isolation element has a first part extending along a side of the first electrically conductive element facing the cap part, and a second part extending along a part of the side of the electrochemical cell facing the cap part and comprising a through hole through which the anode current collector is guided, the first part of the isolation element is displaced relative to the second part of the isolating element toward the cap part by an amount corresponding at least to a thickness of the first electrically conductive element, and the second electrically conductive element is formed as a plate extending along a side of the second part of the isolation element facing the cap part. The isolation element is arranged between the first electrically conductive element and the second electrically conductive element, so that the electrically conductive elements, and therefore the electrodes of the secondary cell, are electrically isolated from one another by means of the isolation element. As the case part and the cap part act as terminals of the secondary cell, the case part and the cap part may be electrically isolated from one another by means of the isolation element. Since the electrically conductive elements are plate-shaped, a relative large contact area is given between the respective electrically conductive element and the respective current collector, and also between the respective electrically conductive element and the cap part or case part, so that the contact resistance between the respective electrically conductive element and the respective current collector, and between the respective electrically conductive element and the cap part or case part, is very small. Moreover, these large contact areas each create a large welding contact area between the respective electrically conductive element and the respective current collector, so that the strength of these connections are enhanced. Since the first part of the isolation element is displaced relative to the second part of the isolating element toward the cap part by an amount corresponding at least to the thickness of the first electrically conductive element, the volume occupancy of the secondary cell is higher compared with the secondary cell according to the foregoing latest embodiment, where the electrically conductive elements extend along at least approximately the whole electrochemical cell.

According to a further advantageous embodiment the first conductive element is an aluminum plate and/or the second electrically conductive element is a copper plate. The aluminum plate may be connected with an aluminum cathode current collector electrically connected with the cathode of the secondary cell. The copper plate may be connected with a copper anode current collector being electrically connected with the anode of the secondary cell.

According to a further advantageous embodiment the case part and the isolation element on the one hand and the isolation element and the cap part on the other hand are adhesively bonded to each other. Through this, assembly of the secondary cell is simplified and is realized without mechanical fixing elements.

According to the invention the secondary cell comprises at least one safety device for discharging the electrochemical cell when the electrochemical cell is in an abnormal state, wherein the safety device is electrically connected with the current collectors. With the safety device, the secondary cell can be brought very quickly in a safe discharged state. In case of an abnormal state of the electrochemical cell, the safety device establishes at least one fast discharge short circuit path between the electrodes of the electrochemical cell.

According to a further advantageous embodiment the safety device is arranged inside or outside of the casing. In the first case, a safe secondary cell can be provided. In the second case, the safety device can be integrated on the module level, wherein the safety device can be shared by two or more secondary cells, for example.

A method according to the present invention for manufacturing a secondary cell for a traction battery of a vehicle is defined as independent claim 7.

The above described advantages of the secondary cell correspond to advantages of the method. The secondary cell according to any one of the above described embodiments or a combination of at least two of these embodiments with each other may be manufactured using the method.

### Drawings

Further details, features and advantages of the invention are disclosed in the following description and the drawings showing:
- Figure 1: a schematic and perspective exploded view of an embodiment of a secondary cell according to the present invention;
- Figure 2: a schematic and perspective exploded view of a further embodiment of a secondary cell according to the present invention; and
- Figure 3: a schematic cross section of an example of a secondary cell which does not form part of the invention

### Preferred embodiments of the invention

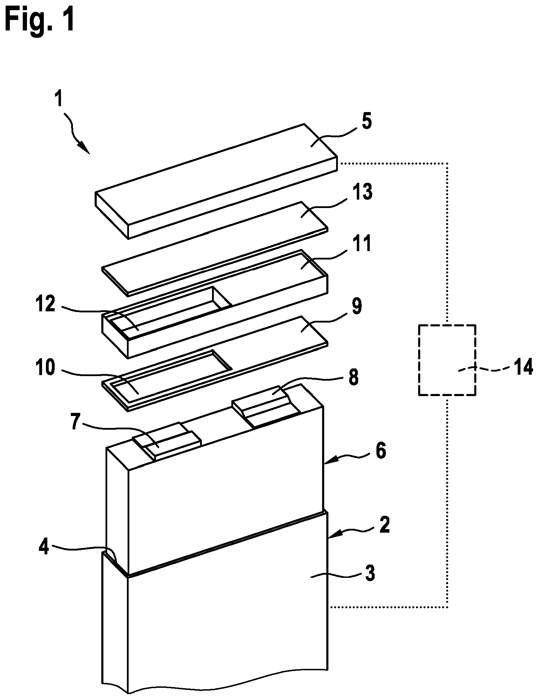

Figure 1 shows a schematic and perspective exploded view of an embodiment of a secondary cell 1 according to the present invention for a traction battery (not shown) of a vehicle (not shown).

The secondary cell 1 comprises a prismatic casing 2 comprising a case part 3 having an aperture 4 at one side and a cap part 5 being indirectly connected with this side of the case part 3. The case part 3 and the cap part 5 are electrically conductive and constitute the terminals of the secondary cell 1 for electrically contacting the secondary cell 1 with the outside.

Further, the secondary cell 1 comprises an electrochemical cell 6 contained within the casing 2 and comprising an anode current collector 7 made from copper and electrically connected with an anode terminal (here the cap part 5) of the secondary cell 1 and a cathode current collector 8 made from aluminum and electrically connected with a cathode terminal (here the case part 3) of the secondary cell 1. Both the anode current collector 7 and the cathode current collector 8 are arranged on one side, i. e. the upper side in Figure 1, of the electrochemical cell 6 facing the cap part 5.

The cathode current collector 8 is welded to a first electrically conductive element 9 being welded, e.g. spot welded, to the cathode terminal, i. e. to the case part 3 of the secondary cell 1. Therefore, the cathode current collector 8 is electrically connected with the case part 3 via the first electrically conductive element 9. Through this, the case part 3 has a positive electric potential preventing a lithium deposition and a corrosion within the secondary cell 1. The first electrically conductive element 9 is formed as a plate extending along the upper side of the electrochemical cell 6 facing the cap part 5 and has a through hole 10 through which the anode current collector 7 is guided without contacting the first electrically conductive element 9. The first conductive element 9 is an aluminum plate.

The secondary cell 1 further comprises an electrically non-conductive isolation element 11. The isolation element 11 extends along a side of the first electrically conductive element 9 facing the cap part 5 and comprises a through hole 12 aligned with the through hole 10 of the first electrically conductive element 9. The anode current collector 7 is welded to a second electrically conductive element 13 being welded to the anode terminal, i. e. to the cap part 5 of the secondary cell 1. Therefore, the anode current collector 7 is electrically connected with the cap part 5 via the second electrically conductive element 13. The second electrically conductive element 13 is formed as a plate extending along a side of the isolation element 11 facing the cap part 5. The second electrically conductive element 13 is a copper plate.

The case part 3 and the isolation element 11 on the one hand and the isolation element 11 and the cap part 5 on the other hand are adhesively bonded to each other.

The secondary cell 1 comprises a safety device 14 for discharging the electrochemical cell 6 when the electrochemical cell 6 is in an abnormal state. The safety device 14 is electrically connected with the current collectors 7 and 8 via the cap part 5 and the case part 3. The safety device 14 may be arranged inside or outside of the casing 2.

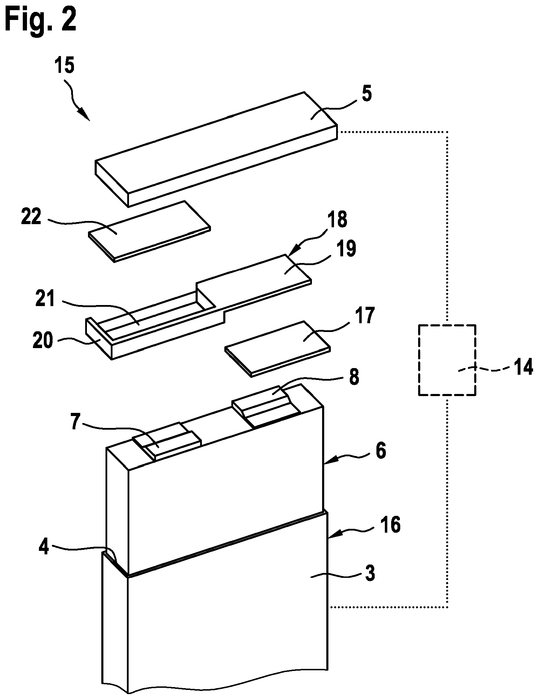

Figure 2 shows a schematic and perspective exploded view of a further embodiment of a secondary cell 15 according to the present invention for a traction battery (not shown) of a vehicle (not shown).

The secondary cell 15 comprises a prismatic casing 16 comprising a case part 3 having an aperture 4 at one side and a cap part 5 being indirectly connected with this side of the case part 3. The case part 3 and the cap part 5 are electrically conductive and constitute the terminals of the secondary cell 15 for electrically contacting the secondary cell 15 with the outside.

Further, the secondary cell 15 comprises an electrochemical cell 6 contained within the casing 16 and comprising an anode current collector 7 made from copper and electrically connected with an anode terminal (here the cap part 5) of the secondary cell 15 and a cathode current collector 8 made from aluminum and electrically connected with a cathode terminal (here the case part 3) of the secondary cell 15. Both the anode current collector 7 and the cathode current collector 8 are arranged on one side, i. e. the upper side in Figure 2, of the electrochemical cell 6 facing the cap part 5.

The cathode current collector 8 is welded to a first electrically conductive element 17 being welded, e.g. spot welded, to the cathode terminal, i. e. to the case part 3 of the secondary cell 15. Therefore, the cathode current collector 8 is electrically connected with the case part 3 via the first electrically conductive element 17. Through this, the case part 3 has a positive electric potential preventing a lithium deposition and a corrosion within the secondary cell 15. The first electrically conductive element 17 is formed as a plate extending along a part, e. g. less than the half, of the side of the electrochemical cell 6 facing the cap part 5 without contacting the anode current collector 7. The first conductive element 17 is an aluminum plate.

The secondary cell 1 further comprises an electrically non-conductive isolation element 18. The isolation element 18 has a first part 19 extending along a side of the first electrically conductive element 17 facing the cap part 5, and a second part 20 extending along a part of the side of the electrochemical cell 6 facing the cap part 5 and comprising a through hole 21 through which the anode current collector 7 is guided. The first part 19 of the isolation element 18 is displaced relative to the second part 20 of the isolating element 18 toward the cap part 5 by an amount corresponding at least to a thickness of the first electrically conductive element 17.

The anode current collector 7 is welded to a second electrically conductive element 22 being welded to the anode terminal, i. e. to the cap part 5 of the secondary cell 15. Therefore, the anode current collector 7 is electrically connected with the cap part 5 via a second electrically conductive element 22. The second electrically conductive element 22 is formed as a plate extending along a side of the second part 20 of the isolation element 18 facing the cap part 5. The second electrically conductive element 22 is a copper plate.

The case part 3 and the isolation element 18 on the one hand and the isolation element 18 and the cap part 5 on the other hand are adhesively bonded to each other.

The secondary cell 15 comprises a safety device 14 for discharging the electrochemical cell 6 when the electrochemical cell 6 is in an abnormal state. The safety device 14 is electrically connected with the current collectors 7 and 8 via the cap part 5 and the case part 3. The safety device 14 may be arranged inside or outside of the casing 2.

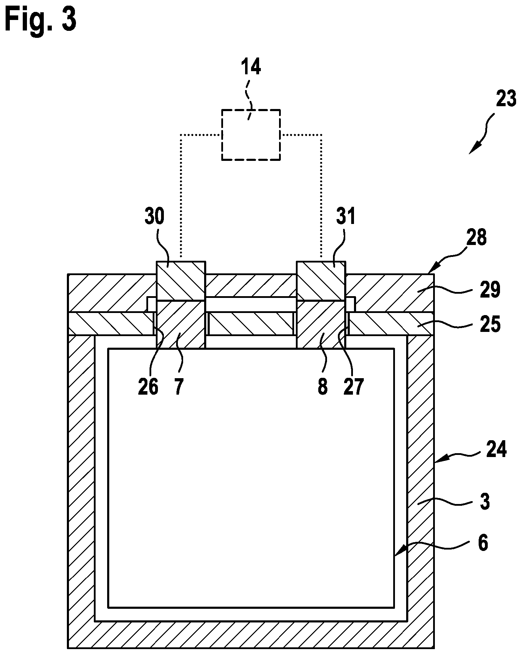

Figure 3 shows a schematic view of an example of a secondary cell 23 for a traction battery (not shown) of a vehicle (not shown), which is not part of the invention.

The secondary cell 23 comprises a prismatic casing 24 comprising a case part 3 having an aperture 4 at one side and a cap part 28 being indirectly connected with this side of the case part 3.

Further, the secondary cell 23 comprises an electrochemical cell 6 contained within the casing 24 and comprising an anode current collector 7 made from copper and electrically connected with an anode terminal 30 of the secondary cell 23 and a cathode current collector 8 made from aluminum and electrically connected with a cathode terminal 31 of the secondary cell 23. Both the anode current collector 7 and the cathode current collector 8 are arranged on one side, i. e. the upper side in Figure 3, of the electrochemical cell 6 facing the cap part 28.

The secondary cell 23 further comprises an electrically non-conductive isolation element 25. The isolation element 25 has a first through hole 26 through which the anode current collector 7 is guided and a second through hole 27 through which the cathode current collector 8 is guided.

The cap part 28 comprises an electrically non-conductive member 29 and the secondary cell terminals 30 and 31 for electrically contacting the secondary cell 23 with the outside, wherein the secondary cell terminals 30 and 31 are electrically isolated from one another by means of the electrically non-conductive member 29. The anode current collector 7 is directly welded to the terminal 30 and the cathode current collector 8 is directly welded to the terminal 31.

The case part 3 and the isolation element 25 on the one hand and the isolation element 25 and the cap part 28 on the other hand are adhesively bonded to each other.

The secondary cell 23 may comprise a safety device 14 for discharging the electrochemical cell 6 when the electrochemical cell 6 is in an abnormal state. The safety device 14 may be electrically connected with the current collectors 7 and 8 via the terminals 30 and 31. The safety device 14 may be arranged inside or outside of the casing 24.

## Claims

1. A secondary cell (1, 15) for a traction battery of a vehicle, comprising:
- a prismatic casing (2, 16) comprising a case part (3) having an aperture (4) at one side and a cap part (5) being at least indirectly connected with this side of the case part (3);
- wherein the case part (3) and the cap part (5) are at least partly electrically conductive and constitute terminals of the secondary cell (1,15) for electrically contacting the secondary cell (1,15) from the outside;
- at least one electrochemical cell (6) contained within the casing (2, 16) and comprising at least one anode current collector (7) electrically connected with the cap part (5) and at least one cathode current collector (8) electrically connected with the case part (3);
- wherein both the anode current collector (7) and the cathode current collector (8) are arranged on one side of the electrochemical cell (6) facing the cap part (5);
- wherein the cathode current collector (8) is welded to a first electrically conductive element (9,17) being welded to the case part (3) and the anode current collector (7) is welded to a second electrically conductive element (13, 22) being welded to the cap part (5);
- a safety device (14) for discharging the electrochemical cell (6) when the electrochemical cell (6) is in an abnormal state;
- wherein the safety device (14) is electrically connected with the cathode current collector (8) via the case part (3) and with the anode current collector (7) via the cap part (5).

2. The secondary cell (1) according to claim 1, further comprising at least one electrically non-conductive isolation element (11), wherein
- the first electrically conductive element (9) is formed as a plate extending along the side of the electrochemical cell (6) facing the cap part (5) and has a first through hole (10) through which the anode current collector (7) is guided without contacting the first electrically conductive element (9),
- the isolation element (11) extends along a side of the first electrically conductive element (9) facing the cap part (5) and comprises a second through hole (12) aligned with the first through hole (10) of the first electrically conductive element (9), and
- the second electrically conductive element (13) is formed as a plate extending along a side of the isolation element (11) facing the cap part (5).

3. The secondary cell (15) according to claim 1, further comprising at least one electrically non-conductive isolation element (18), wherein
- the first electrically conductive element (17) is formed as a plate extending along a part of the side of the electrochemical cell (6) facing the cap part (5) without contacting the anode collector (7),
- the isolation element (18) has a first part (19) extending along a side of the first electrically conductive element (17) facing the cap part (5), and a second part (20) extending along a part of the side of the electrochemical cell (6) facing the cap part (5) and comprising a through hole (21) through which the anode current collector (7) is guided,
- the first part (19) of the isolation element (18) is displaced relative to the second part (20) of the isolating element (18) toward the cap part (5) by an amount corresponding at least to a thickness of the first electrically conductive element (17), and
- the second electrically conductive element (22) is formed as a plate extending along a side of the second part (20) of the isolation element (18) facing the cap part (5).

4. The secondary cell (1, 15) according to any one of claims 1 to 3, wherein the first conductive element (9, 17) is an aluminum plate and/or the second electrically conductive (13, 22) element is a copper plate.

5. The secondary cell (1, 15) according to any one of claims 1 to 4, wherein the case part (3) and the isolation element (11, 18) on the one hand and the isolation element (11, 18) and the cap part (5) on the other hand are adhesively bonded to each other.

6. The secondary cell (1, 15) according to any of claim 1 to 5, wherein the safety device (14) is arranged inside or outside of the casing (2, 16).

7. A method for manufacturing a secondary cell (1, 15, 23) for a traction battery of a vehicle, comprising the steps of:
- providing a prismatic casing (2, 16) comprising a case part (3) having an aperture (4) at one side and a cap part (5, 28) being at least indirectly connected with this side of the case part (3), wherein the case part (3) and the cap part (5) are at least partly electrically conductive and constitute terminals of the secondary cell (1,15) for electrically contacting the secondary cell (1,15) from the outside;
- providing at least one electrochemical cell (6) comprising at least one anode current collector (7) and at least one cathode current collector (8), wherein both the anode current collector (7) and the cathode current collector (8) are arranged on one side of the electrochemical cell (6);
- inserting the electrochemical cell (6) in the case part (3) so that the anode and cathode current collector (7, 8) are accessible through the aperture (4) of the case part (3); and
- welding the cathode current collector (8) to a first electrically conductive element (9,17) and the anode current collector (7) to a second electrically conductive element (13, 22);
- welding the first electrically conductive element (9,17) to the case part (3) and the second electrically conductive element (13, 22) to the cap part (5);
- providing a safety device (14) for discharging the electrochemical cell (6) when the electrochemical cell (6) is in an abnormal state;
- electrically connecting the safety device (14) with the cathode current collector (8) via the case part (3) and with the cathode current collector (7) via the cap part (5).

## Patentansprüche

1. Sekundärzelle (1, 15) für eine Traktionsbatterie eines Fahrzeugs, umfassend:
- ein prismatisches Gehäuse (2, 16), das ein Gehäuseteil (3) mit einer Öffnung (4) an einer Seite und ein Kappenteil (5) umfasst, das mindestens indirekt mit dieser Seite des Gehäuseteils (3) verbunden ist;
- wobei das Gehäuseteil (3) und das Kappenteil (5) mindestens teilweise elektrisch leitend sind und Anschlüsse der Sekundärzelle (1, 15) zur elektrischen Kontaktierung der Sekundärzelle (1, 15) von außen bilden;
- mindestens eine elektrochemische Zelle (6), die in dem Gehäuse (2, 16) enthalten ist und mindestens einen Anodenstromkollektor (7), der elektrisch mit dem Kappenteil (5) verbunden ist, und mindestens einen Kathodenstromkollektor (8), der elektrisch mit dem Gehäuseteil (3) verbunden ist, umfasst;
- wobei sowohl der Anodenstromkollektor (7) als auch der Kathodenstromkollektor (8) auf einer dem Kappenteil (5) zugewandten Seite der elektrochemischen Zelle (6) angeordnet sind;
- wobei der Kathodenstromkollektor (8) mit einem ersten elektrisch leitenden Element (9, 17) verschweißt ist, das mit dem Gehäuseteil (3) verschweißt ist, und der Anodenstromkollektor (7) mit einem zweiten elektrisch leitenden Element (13, 22) verschweißt ist, das mit dem Kappenteil (5) verschweißt ist;
- eine Sicherheitsvorrichtung (14) zum Entladen der elektrochemischen Zelle (6), wenn sich die elektrochemische Zelle (6) in einem anormalen Zustand befindet;
- wobei die Sicherheitsvorrichtung (14) über das Gehäuseteil (3) mit dem Kathodenstromkollektor (8) und über das Kappenteil (5) mit dem Anodenstromkollektor (7) elektrisch verbunden ist.

2. Sekundärzelle (1) gemäß Anspruch 1, ferner umfassend mindestens ein elektrisch nicht leitendes Isolationselement (11), wobei
- das erste elektrisch leitende Element (9) als Platte ausgebildet ist, die sich entlang der dem Kappenteil (5) zugewandten Seite der elektrochemischen Zelle (6) erstreckt und ein erstes Durchgangsloch (10) aufweist, durch das der Anodenstromkollektor (7) ohne Kontakt mit dem ersten elektrisch leitenden Element (9) geführt wird,
- das Isolationselement (11) sich entlang einer dem Kappenteil (5) zugewandten Seite des ersten elektrisch leitenden Elements (9) erstreckt und ein zweites Durchgangsloch (12) umfasst, das mit dem ersten Durchgangsloch (10) des ersten elektrisch leitenden Elements (9) ausgerichtet ist, und
- das zweite elektrisch leitende Element (13) als Platte ausgebildet ist, die sich entlang einer dem Kappenteil (5) zugewandten Seite des Isolationselements (11) erstreckt.

3. Sekundärzelle (15) gemäß Anspruch 1, ferner umfassend mindestens ein elektrisch nicht leitendes Isolationselement (18), wobei
- das erste elektrisch leitende Element (17) als Platte ausgebildet ist, die sich entlang eines Teils der Seite der elektrochemischen Zelle (6) erstreckt, die dem Kappenteil (5) zugewandt ist, ohne den Anodenkollektor (7) zu berühren,
- das Isolationselement (18) einen ersten Teil (19), der sich entlang einer dem Kappenteil (5) zugewandten Seite des ersten elektrisch leitenden Elements (17) erstreckt, und einen zweiten Teil (20) aufweist, der sich entlang eines Teils der dem Kappenteil (5) zugewandten Seite der elektrochemischen Zelle (6) erstreckt und ein Durchgangsloch (21) umfasst, durch das der Anodenstromkollektor (7) geführt wird,
- der erste Teil (19) des Isolationselements (18) relativ zum zweiten Teil (20) des Isolationselements (18) in Richtung des Kappenteils (5) um einen Betrag verschoben ist, der mindestens einer Dicke des ersten elektrisch leitenden Elements (17) entspricht, und
- das zweite elektrisch leitende Element (22) als Platte ausgebildet ist, die sich entlang einer dem Kappenteil (5) zugewandten Seite des zweiten Teils (20) des Isolationselements (18) erstreckt.

4. Sekundärzelle (1, 15) gemäß einem der Ansprüche 1 bis 3, wobei das erste leitende Element (9, 17) eine Aluminiumplatte ist und/oder das zweite elektrisch leitende Element (13, 22) eine Kupferplatte ist.

5. Sekundärzelle (1, 15) gemäß einem der Ansprüche 1 bis 4, wobei das Gehäuseteil (3) und das Isolationselement (11, 18) einerseits und das Isolationselement (11, 18) und das Kappenteil (5) andererseits miteinander verklebt sind.

6. Sekundärzelle (1, 15) gemäß einem der Ansprüche 1 bis 5, wobei die Sicherheitsvorrichtung (14) innerhalb oder außerhalb des Gehäuses (2, 16) angeordnet ist.

7. Verfahren zum Herstellen einer Sekundärzelle (1, 15, 23) für eine Traktionsbatterie eines Fahrzeugs, umfassend die folgenden Schritte:
- Bereitstellen eines prismatischen Gehäuses (2, 16), das ein Gehäuseteil (3) mit einer Öffnung (4) an einer Seite und ein mindestens indirekt mit dieser Seite des Gehäuseteils (3) verbundenes Kappenteil (5, 28) umfasst, wobei das Gehäuseteil (3) und das Kappenteil (5) mindestens teilweise elektrisch leitend sind und Anschlüsse der Sekundärzelle (1, 15) zum elektrischen Kontaktieren der Sekundärzelle (1, 15) von außen bilden;
- Bereitstellen mindestens einer elektrochemischen Zelle (6) mit mindestens einem Anodenstromkollektor (7) und mindestens einem Kathodenstromkollektor (8), wobei sowohl der Anodenstromkollektor (7) als auch der Kathodenstromkollektor (8) auf einer Seite der elektrochemischen Zelle (6) angeordnet sind;
- Einsetzen der elektrochemischen Zelle (6) in das Gehäuseteil (3), sodass der Anoden- und Kathodenstromkollektor (7, 8) durch die Öffnung (4) des Gehäuseteils (3) zugänglich sind; und
- Verschweißen des Kathodenstromkollektors (8) mit einem ersten elektrisch leitenden Element (9, 17) und des Anodenstromkollektors (7) mit einem zweiten elektrisch leitenden Element (13, 22);
- Verschweißen des ersten elektrisch leitenden Elements (9, 17) mit dem Gehäuseteil (3) und des zweiten elektrisch leitenden Elements (13, 22) mit dem Kappenteil (5);
- Bereitstellen einer Sicherheitsvorrichtung (14) zum Entladen der elektrochemischen Zelle (6), wenn sich die elektrochemische Zelle (6) in einem anormalen Zustand befindet;
- elektrisches Verbinden der Sicherheitsvorrichtung (14) mit dem Kathodenstromkollektor (8) über das Gehäuseteil (3) und mit dem Kathodenstromkollektor (7) über das Kappenteil (5).

## Revendications

1. Cellule secondaire (1, 15) pour une batterie de traction d'un véhicule, comprenant :
- un boîtier prismatique (2, 16) comprenant une partie enveloppe (3) ayant une ouverture (4) au niveau d'un côté et une partie couvercle (5) étant au moins indirectement connectée à ce côté de la partie enveloppe (3) ;
- la partie enveloppe (3) et la partie couvercle (5) étant au moins partiellement électroconductrices et constituant des bornes de la cellule secondaire (1, 15) pour établir un contact électrique avec la cellule secondaire (1, 15) depuis l'extérieur ;
- au moins une cellule électrochimique (6) contenue à l'intérieur du boîtier (2, 16) et comprenant au moins un collecteur de courant d'anode (7) connecté électriquement à la partie couvercle (5) et au moins un collecteur de courant de cathode (8) connecté électriquement à la partie enveloppe (3) ;
- le collecteur de courant d'anode (7) et le collecteur de courant de cathode (8) étant tous deux agencés sur un côté de la cellule électrochimique (6) faisant face à la partie couvercle (5) ;
- le collecteur de courant de cathode (8) étant soudé à un premier élément électroconducteur (9, 17) soudé à la partie enveloppe (3) et le collecteur de courant d'anode (7) étant soudé à un deuxième élément électroconducteur (13, 22) soudé à la partie couvercle (5) ;
- un dispositif de sécurité (14) pour décharger la cellule électrochimique (6) lorsque la cellule électrochimique (6) est dans un état anormal ;
- le dispositif de sécurité (14) étant connecté électriquement au collecteur de courant de cathode (8) par l'intermédiaire de la partie enveloppe (3) et au collecteur de courant d'anode (7) par l'intermédiaire de la partie couvercle (5).

2. Cellule secondaire (1) selon la revendication 1, comprenant en outre au moins un élément d'isolation non électroconducteur (11), dans laquelle
- le premier élément électroconducteur (9) est sous la forme d'une plaque s'étendant le long du côté de la cellule électrochimique (6) faisant face à la partie couvercle (5) et a un premier trou traversant (10) à travers lequel le collecteur de courant d'anode (7) est guidé sans entrer en contact avec le premier élément électroconducteur (9),
- l'élément d'isolation (11) s'étend le long d'un côté du premier élément électroconducteur (9) faisant face à la partie couvercle (5) et comprend un deuxième trou traversant (12) aligné avec le premier trou traversant (10) du premier élément électroconducteur (9), et
- le deuxième élément électroconducteur (13) est sous la forme d'une plaque s'étendant le long d'un côté de l'élément d'isolation (11) faisant face à la partie couvercle (5).

3. Cellule secondaire (15) selon la revendication 1, comprenant en outre au moins un élément d'isolation non électroconducteur (18),
- le premier élément électroconducteur (17) est sous la forme d'une plaque s'étendant le long d'une partie du côté de la cellule électrochimique (6) faisant face à la partie couvercle (5) sans entrer en contact avec le collecteur d'anode (7),
- l'élément d'isolation (18) a une première partie (19) s'étendant le long d'un côté du premier élément électroconducteur (17) faisant face à la partie couvercle (5), et une deuxième partie (20) s'étendant le long d'une partie du côté de la cellule électrochimique (6) faisant face à la partie couvercle (5) et comprenant un trou traversant (21) à travers lequel le collecteur de courant d'anode (7) est guidé,
- la première partie (19) de l'élément d'isolation (18) est déplacée par rapport à la deuxième partie (20) de l'élément d'isolation (18) en direction de la partie couvercle (5) d'une quantité correspondant au moins à une épaisseur du premier élément électroconducteur (17), et
- le deuxième élément électroconducteur (22) est sous la forme d'une plaque s'étendant le long d'un côté de la deuxième partie (20) de l'élément d'isolation (18) faisant face à la partie couvercle (5).

4. Cellule secondaire (1, 15) selon l'une quelconque des revendications 1 à 3, dans laquelle le premier élément conducteur (9, 17) est une plaque d'aluminium et/ou le deuxième élément électroconducteur (13, 22) est une plaque de cuivre.

5. Cellule secondaire (1, 15) selon l'une quelconque des revendications 1 à 4, dans laquelle la partie enveloppe (3), et l'élément d'isolation (11, 18) d'une part et l'élément d'isolation (11, 18) et la partie couvercle (5) d'autre part, sont collés l'un à l'autre.

6. Cellule secondaire (1, 15) selon l'une quelconque des revendications 1 à 5, dans laquelle le dispositif de sécurité (14) est agencé à l'intérieur ou à l'extérieur du boîtier (2, 16).

7. Procédé de production d'une cellule secondaire (1, 15, 23) pour une batterie de traction d'un véhicule, comprenant les étapes consistant à :
- fournir un boîtier prismatique (2, 16) comprenant une partie enveloppe (3) ayant une ouverture (4) sur un côté et une partie couvercle (5, 28) étant au moins indirectement connectée à ce côté de la partie enveloppe (3), la partie enveloppe (3) et la partie couvercle (5) étant au moins partiellement électroconductrices et constituant des bornes de la feuille secondaire (1, 15) pour établir un contact électrique avec la cellule secondaire (1, 15) depuis l'extérieur ;
- fournir au moins une cellule électrochimique (6) comprenant au moins un collecteur de courant d'anode (7) et au moins un collecteur de courant de cathode (8), le collecteur de courant d'anode (7) et le collecteur de courant de cathode (8) étant tous deux agencés sur un côté de la cellule électrochimique (6) ;
- insérer la cellule électrochimique (6) dans la partie enveloppe (3) de sorte que le collecteur de courant d'anode et de cathode (7, 8) soit accessible à travers l'ouverture (4) de la partie enveloppe (3) ; et
- souder le collecteur de courant de cathode (8) à un premier élément électroconducteur (9, 17) et le collecteur de courant d'anode (7) à un deuxième élément électroconducteur (13, 22) ;
- souder le premier élément électroconducteur (9, 17) à la partie enveloppe (3) et le deuxième élément électroconducteur (13, 22) à la partie couvercle (5) ;
- fournir un dispositif de sécurité (14) pour décharger la cellule électrochimique (6) lorsque la cellule électrochimique (6) est dans un état anormal ;
- connecter électriquement le dispositif de sécurité (14) au collecteur de courant de cathode (8) par l'intermédiaire de la partie enveloppe (3) et au collecteur de courant d'anode (7) par l'intermédiaire de la partie couvercle (5).
